# EUROPEAN PATENT SPECIFICATION

(11) **EP 0 687 927 B1**
(45) Date of publication and mention of the grant of the patent: **02.02.2000**
(21) Application number: 95201513.9
(22) Date of filing: 08.06.1995
(51) Int. Cl.: G02B 6/16

(54) **Methods of manufacture of microporous silica coated silica fibers**
Verfahren zur Herstellung Mikroporöse Siliziumdioxyd-Faser mit Siliziumdioxyd Mantel
Méthodes de fabrication des fibres microporeuses de silice à couche de silice

(30) Priority: 10.06.1994 US 258212
(43) Date of publication of application: 20.12.1995
(73) Proprietor: CeramOptec GmbH, 53121 Bonn (DE)
(72) Inventor: Castro, Jose, Somers, CT 06071 (US); Divita, Sam, West Long Branch, NJ 07764 (US); Vullestero, Neil, Ridgewood, NJ 07451 (US)

(56) References cited:
- EP-A- 0 473 104
- EP-A- 0 520 653
- US-A- 3 806 224
- US-A- 5 114 738

## Description

The field of the invention relates to a method of producing glass fibers as defined in claim 1, which comprise a solid glass core and microporous structured sol-gel derived coatings of regulated porosity. In particular radiation resistant 100% silica glass fiber having appropriate core/clad index of refraction to form a waveguide suitable for use in high nuclear radiation environments, and especially for outer space optical communication systems. Further, fibers with pure silica cores and silica based microporous coatings can be further treated to make them useful new structures for non-optical applications such as chromatographic columns, as filters, as sites for enzyme fixation, or introduction of radioisotopes into the human body with minimum invasiveness to treat cancerous tumors.

Present generation optical fiber continues to exhibit radiation induced losses which dramatically affect the reliability and performance by a substantial margin, even at tactical nuclear levels. Another area of particular concern is associated with long or short ground deployed cables for tactical applications. Optical losses induced by ionizing radiation form undesired color centers. This is a problem in optical fiber communications. The severity of the losses increases with the susceptibility for recovery time following the exposure is reduced.

Most radiation resistant fiber identified thus far typically fall into two classes: (1) certain polymer clad silica/(PCS) fibers with synthetic SiO₂ cores known as Suprasil or Spectrasil A; and (2) selected germanium doped silica fibers with lightly doped SiO₂ cladding. Certain index-modifying dopants such as boron, aluminium, titanium, phosphorous and fluorine may offer advantages under certain conditions, such as short times following high dose ratio exposure or at lower temperature, but have been shown to be counterproductive for long term exposure. Although some of the latest compositional silica glass cladding work use fluorine and fluoride/boron doping of high OH silicas with some improvement in radiation resistance, radiation problems still plague optical fibers in nuclear radiation environments.

Included in the existing prior art is United States Patent No. 5,114,738, having one common inventor with the present application and that patent established that it was feasible to create an optical fiber by applying sol-gel coatings to a sacrificial host fiber and after removing the host fully consolidating the gelled structure into an optical fiber. The success in creating an optical fiber by this rather elaborate process led the present inventors to postulate the possibility of finding a way to apply protective silica layers to optical fibers by a modified sol-gel process. In discovering a more efficient process that yielded sol-gel coatings of sufficient cohesiveness and thickness that they could be transformed into microporous structures with fully densified outer 'skins' it was also found that the microporosity could be sufficiently controlled to use the coating as a cladding.

An all silica fiber, where the density of the cladding could be varied enough to yield a step index optical fiber with a useful numerical aperture, had previously been a desirable though unachieved goal. In the past, typically, either the core silica or the cladding silica was doped to achieve differences in the refractive indices sufficient to make useful optical fibers. US-A-3 806 224 discloses the production of silica glass fibers having an undoped silica core and a silica cladding formed at relatively low temperatures. This cladding is of lowered density and refractive index. European Patent No. EP-A-0 520 653 shows a low index of refraction optical fiber that is produced by using capillary tubes or rods to form a cladding layer over a generally germanium doped silica core. As long as the cross sectional dimension of the channels in the tubes and the interstitial passageways between tubes or rods are kept below the dimension of the wavelength of light to be transmitted through the optical fiber, the refractive indices of the channels and passageways and the solid glass, making up the cladding cross section, are averaged together and the effective refractive index of the composite layer will be lower than that of the core material. Since doped silica is still used for the core material, radiation resistance will not be changed. Furthermore, the presence of the interstitial passageways has a potential problem with absorption and transfer by capillary action of fluids which come in contact with the fiber

The current invention among its many embodiments includes a method of producing a practical optical fiber which is composed of a pure silica core and of a pure silica cladding. Such a construction will solve many of the problems in the radiation resistance of optical fibers described above. The process for making such unique optical fibers, as well as the fibers themselves, represents a wide step beyond the previous state of the art which is neither anticipated nor rendered obvious by the prior art.

In the present invention, optical 100% silica, low index glass cladding on high purity undoped synthetic or fused silica glass fiber core, can be manufactured by means of sol-gel processing. Sol-gel glass, i.e. a combination of appropriate and compatible silica mixtures derived from silicone fluids and submicron silica glass precursor particulates, is either thermally treated in melt form or applied in dip or spray form and thermally bonded onto the fiber core during the in-line fiberization cycle. Current optical glass fibers containing various dopants including germanium, phosphorus, cerium, gallium, chlorine, ytterbium can create color centers when exposed to ionizing radiation. These color centers increase optical attenuation in the optical fiber and thus severely degrade performance. Conventional on-line processing of an optical glass fiber waveguide uses dopants to form a high index of refraction silica core using conventional dopants. However, the present inventors' silica sol-gel method offers an inexpensive method of coating to the conformed fiber dimension method for precise clad coating of silica core fiber. The cladding porosity can be tailored for the appropriate index of refraction by controlling the quenching conditions of the sol-gel glass cladding from the liquid state to the submicroscopic amorphous glassy state. A 100% pure silica waveguide overcomes current susceptibility of conventional doped optical glass fiber to nuclear radiation damage.

This invention relates to improvement in the art of sol-gel coating vitreous surfaces. In general, the present invention is adapted to produce semi-continuous glass fiber structures with controlled porosity and density in the sol-gel coating which can be employed as substrates for column chromatography or further processed to serve as sensors of carriers of radioactive isotopes for localized treatment of internal cancerous tumors. In particular, the present invention is adapted to the production of photonic optoelectronic devices embodying sol-gel silica coating of low index of refraction for on-line cladding of fused or synthetic silica core optical glass fiber including a conventional doped waveguide.

The term "vitreous" as herein applies to any material which has continuous glass or glassy phase and hence an exposed surface of which all or at least a portion is glass.

The present invention provides a novel process for the production of high quality nuclear resistant, low loss, high mechanical strength optical silica glass fiber waveguides. More specifically, in accordance with the invention, a continuous commercial process is provided in which the conventional on-line fiberization of the super pure fused (synthetic) silica glass core of extremely long lengths is used and the core is then moved past a series of dip or spray stations at which time the silica core is coated with one or more shells of SiO₂ glass coating of a tailored low index of refraction and subsequently thermally vitrified.

Thermal rapid cooling of porous glass cladding at very high rates of speed forms a very thin (1 to 100 nm thick) continuous conformal layered film on a fiber core structure that will inhibit moisture penetration as well as heal surface defects which enhances the mechanical, optical, and structural integrity of the optical fiber. This vitreous film can also be used as a substrate for further processing such as applying various types of specialty coatings: diamond, diamond-like-carbon, metallic, sol-gel, or other types of coatings.

The present invention, thus, includes a method of producing a product of 100% synthetic or fused silica glass fiber undoped core or cladding type optical waveguide. The silica passivation layer for healing chemical and surface defects can be applied by conventional dipping of silica glass fiber core and pyrolysis of precursor or via a sol-gel pure silica glass sputtering target or by laser ablation and deposition, plasma arc or vitreous glass frit. The method of the present invention includes in-line processing a microporous silica glass cladding over a dense synthetic or fused silica glass micron size core, including also a dense silica skin layered structured film over the porous clad silica core structure.

In another embodiment of the process, to improve the strength and integrity of the silica fibers, the fiber core is drawn and before it enters the first sol-gel coating station the core is passed through a helium gas stream to remove any residual non-silica material from its surface, especially inside surface flaws. The sol-gel coating is applied and fully fired/consolidated to provide an extremely thin, essentially flaw free surface on the fiber core. Further, coating and processing follows as described in the general process steps to form the microporous silica cladding.

Further processing can include nitride formation of the outer layer of the porous cladding to form an ultra thin (2-40 nm) film of silicon oxynitride hermetic coating over the porous silica clad. Hermetic coating via thermal nitride formation of silica is accomplished primarily by exposing silica fiber at a high temperature, but below the vitrification temperature, to nitric oxide or anhydrous ammonia. Other techniques include nitriding the this n silicon dioxide film in ammonia using an ammonia plasma to enhance ntride formation or implanting low energy nitrogen ions directly into the silica clad surface. direct thermal nitride formation of porous SiO₂ at 1000 ^{o}C was found to enhance nitride growth with maximum thicknesses greater than 20 nm which then allowed the formation of a protective, dense SiO₂ structure to form thereby inhibiting further nitride formation of the surface. This tailored chemical formation of silicon oxynitride allows the fiber to function as an optical waveguide having a silicon oxynitride hermetic coating that will inhibit mechanical degradation caused by environmental stress corrosion currently experienced in conventional optical fibers.

Microporous glass fiber (conventional or D-shaped) coatings are included. Other applications for this type of porous clad fiber demand reactivity with detectors of chemical environments. A new concept, which might use a non-optical fiber, would be a microporous fiber coating for use in medical applications For example, the porous outer coating could incorporate short half-life radioactive species as part of its composition. Such a microporous fiber would allow placement safely and medically close to target tumors to provide localized high doses of radiation. These microporous clad-glass fibers have potential for possible treatment of certain types of cancer, such as liver cancer.

Possible conversion of glass submicroscopic glass bonded particles to porous silica substrate fiber can be devitrified to glass ceramics that contain tailored titanite structured, dielectric/ferroelectric or ferromagnetic (lithium ferrite) crystals injected and heated via laser between 40 to 50 ^{o}C, for example by using an AC magnetic field, including tailored glass ceramic systems for destroying tumors, or with barium titanate crystallites to form glass ceramic dielectrics for high energy storage devices.

Other non-optical embodiments of the fibers produced by the method of the present invention include using the microporous glass fiber substrates as chromatographic columns, filters and for enzyme fixation. These are generally formed by preferential dissolution of one phase of phase separated glass. In these cases, reactivity is essential for producing ion and resulting porous clad glass. Included is ion-beam sputtering deposition of fluoropolymer filled SiO₂ sol-gel clad porous glass fiber having low index of refraction.

A method of processing optical material with varying indices of refraction is also included. This process can produce tailored optical material that can be oriented to create a wide variety of optical devices such as optical couplers, amplifiers, lenses, and other devices dependent on such material.

Sol-gel processing is finding wide application in the production of a variety of optical materials. A sol-gel route based on solutions of alkoxides has been developed to produce transparent thin film composites of sol-gel optical glass cladding via impregnation of dried porous gels fused onto 100% fused silica fiber with organic monomer and polymerization in situ. A wide range of stable non-porous composite fibers can be made by this process. With maximum processing temperatures below 100 ^{o}C, these composites have potential as solid state lasers, non-linear optics and optoelectronic devices being activated via core light fed into these devices through the extra thin submicron glass layer side of D-shaped fiber, i.e. optical coupler detectors, amplifiers, modulators, super conducting and magnetic coatings. Potential applications include waveguide sol-gel derived silver halide glass coatings as photochromic materials bonded to thin layered structures of porous clad fibers.

Obviously, numerous modification and variations of the present invention are possible in the light of the above teachings. It is therefore understood that within the scope of the appended claims, the invention may be practiced otherwise than as specifically described herein.

## Claims

1. A method of producing high mechanical strength, long length silica glass fibers with microporous silica coating(s), having a distribution of pores in the coating, over a conventional continuously drawn silica core, said method characterized by passing the core through a plurality of coating stations to apply siloxane precursors to form shell layer(s) and converting and thermally vitrifying the resulting coated product to achieve predetermined, coherent, microporous silica coating(s).

2. The method of claim 1, further characterized by producing high quality nuclear resistant, low loss, optical silica glass fiber waveguides by controlling the converting and thermally vitrifying steps so as to achieve a predetermined, tailored low index of refraction in the resultant microporous silica cladding.

3. The method of claim 2, further characterized in that the product optical fiber has both a 100% pure silica core and a 100% pure silica cladding.

4. The method of claims 1 or 2, which is further characterized in that said coating stations an sol-gel coating stations and by exposing the drawn silica core to a stream of helium gas before passing the core into the first sol-gel coating station.

5. The method of claims 1, 2 or 4, which is further characterized in that said coating stations an sol-gel coating stations and in that the first sol-gel coating is applied and then fully fired and consolidated to provide a thin, essentially flaw free surface on the fiber core.

6. The method of claims 1, 2, or 4, which is further characterized in that at least one passivation layer capable of healing chemical and surface defects is applied either by dip coating of a glass fiber and pyrolyzing the precursor; or by a sol-gel pure silica glass sputtering target technique; or by laser ablation; or by a plasma arc; or by vitreous glass frit coating.

7. The method of claims 1, 2 or 4, which is further characterized by in-line processing the microporous coated fiber so that a dense silica layered structured film is formed as the outermost layer.

8. The method of claims 1, 2 or 4, which is further characterized by processing via nitridation of the microporous coating to form an ultra thin film of silicon oxynitride as a hermetic coating as the outermost layer.

9. The method of claim 8, which is further characterized in that the nitridation process is either by exposing the coated silica fiber at high temperatures but below vitrification to nitric oxide or anhydrous ammonia; or by nitriding a thin silicon dioxide film in ammonia using an ammonia plasma to enhance nitridation; or by implanting low energy nitrogen ions directly into the coated silica surface; or by direct thermal nitridation of porous silica at temperatures of about 800 °C to 1200 °C to enhance nitride growth with maximum thicknesses greater than 20 nm, and to cause the formation of a protective, dense silica structure thereby inhibiting further nitridation of the surface.

## Revendications

1. Une méthode de production de fibres optiques en verre de silice, de grand longueur, à haute résistance mécanique, avec un(des) revêtement(s) microporeux de silice présentant une distribution des pores dans le revêtement, appliqué sur un coeur de silice conventionnel obtenu par fibrage continu, dite méthode caractérisée par le fait de faire passer la coeur dans un certain nombre de stations de déposition de revêtements permettant - d'appliquer des précurseurs siloxanes qui formeront la(les) couche(s) de gaine - et de modifier et vitrifier thermiquement le produit résultant appliqué pour obtenir un (des) revêtement(s) prédéterminé(s), cohérent(s) en silice microporeuse.

2. La modalité de la revendication 1, est, de plus, caractérisée par la production de fibres optiques en verre de silice optique de haute qualité, résistante aux irradiations nucléaires et d'affaiblissement faible, en contrôlant les étapes de conversion et de vitrification thermique afin d'obtenir un indice de réfraction prédéterminé, adapté, dans la gaine optique résultante de silice microporeuse.

3. La modalité de la revendication 2, est, de plus, caractérisée par le fait que la produit fibre optique est composé et d'un coeur de 100 % de silice pure et d'une gaine optique de 100 % de silice pure.

4. La modalité des revendications, 1 ou 2, est, de plus, caractérisée par le fait d'exposer le coeur de silice fibré (étiré) à un flux d'hélium en état gazeux avant de faire passer le coeur dans la première station de déposition du revêtement sol/gel.

5. La modalité des revendications, 1,2 ou 4, est, de plus, caractérisée par le fait que le premier revêtement sol/gel est appliqué et ensuite totalement passé au feu (vitrifié ?) et consolidé pour obtenir essentiellement une fine surface, sans défectuosité, sur le coeur de fibre.

6. La modalité des revendications, 1,2 ou 4, est, de plus, caractérisée par le fait qu'au moins une couche de passivation, capable de consolider les défauts chimiques et de surface, est appliquée soit par revêtement par immersion d'une fibre de verre et pyrolyse du précurseur; ou par technique de pulvérisation de cible par un verre de silice pure sol/gel ; ou par ablation au laser; ou par un arc plasma ; ou par déposition d'un verre (d'une silice vitreuse) vitreux fritté(e).

7. La modalité des revendications, 1,2 ou 4, est, de plus, caractérisée par un traitement en ligne de la fibre à revêtement microporeux qui permet de former un film structuré de silice dense déposée formant la couche la plus externe.

8. La modalité des revandications, 1,2 ou 4, est, de plus caractérisée par un traitement, via nitridation, du revêtement microporeux de façon à former un film ultra-fin d'oxynitrure de silicium agissant comme revêtement hermétique au niveau de la couche la plus externe.

9. La modalité de la revendication 8, est, de plus, caractérisée par le fait que le procédé de nitruration s'effectue - soit par exposition à haute température de la fibre de silice revêtue, mais avant vitrification en oxyde nitrique ou ammoniac anhydre ; - soit par nitruration d'un film de dioxyde de silicium (silice) dans l'ammoniac en utilisant un plasma d'ammoniac afin d' améliorer la nitruration ; ou en implantant des ions azote lents directement dans la surface de silice déposée ; ou par nitruration thermique directe de la silice poreuse à des températures entre 800°C et 1200°C afin d'améliorer la croissance de nitrure avec des épaisseurs maximales supérieures à 20 nm, et d'avoir pour conséquence la formation d'une structure de silice dense, de protection, qui aura pour but d'empêcher toute nitruration, a posteriori, de la surface.

## Patentansprüche

1. Eine Methode zur Herstellung von Quarzglas-Fasern hoher mechanischer Stabilität, großer Länge und mikroporöser(n) Quarzglas Beschichtung(en), in der die Poren innerhalb der Beschichtung verteilt sind und diese Beschichtung über einem konventionell kontinuierlich gezogenen Kern aufgebracht ist
**dadurch gekennzeichnet,**
daß der Kern durch mehrere Beschichtungsstationen geführt wird, um Siloxan Vorprodukte als Schichtstrukturen abzuscheiden, die dann konvertiert und thermisch verglast werden woraus (eine) vorbestimmte, kohärente, mikroporöse Quarzglas Beschichtung(en) resultiert(en).

2. Die Methode aus Anspruch 1, weiterhin gekennzeichnet, durch das Realisieren einer kernstrahlungsresistenten, verlustarmen optischen Quarzglas Faser durch Kontrolle der Umwandlungs- und thermischen Verschmelzungsschritte, so daß die resultierende mikroporöse Quarzbeschichtung mit einem vorbestimmten und wohldefinierten geringen Brechungsindex hergestellt wird.

3. Die Methode aus Anspruch 2, weiterhin gekennzeichnet dadurch, daß die produzierte optische Glasfaser aus einem 100% reinem Quarzglas-Kern und aus einem 100% reinen Quarzglas-Mantel besteht.

4. Die Methode aus Anspruch 1 oder 2, weiterhin dadurch gekennzeichnet, daß der gezogene Quarzglas-Kern einem Helium-Gasstrom ausgesetzt wird, bevor er die erste "Sol-Gel"- Beschichtungsstation durchläuft.

5. Die Methode aus Anspruch 1,2 oder 4, weiterhin dadurch gekennzeichnet, daß die genannten beschichtenden Stationen "Sol-Gel" beschichtende Stationen sind, wobei die erste "Sol-Gel"-Schicht aufgetragen und dann vollständig erhitzt und verschmolzen wird, um eine dünne im Grunde genommen fehlerfreie Schicht auf dem Faserkern zu erhalten.

6. Die Methode aus Anspruch 1, 2 oder 4, weiterhin dadurch gekennzeichnet, daß mindestens eine Passivierungsschicht zur Ausheilung von chemischen und oberflächlichen Defekten durch Tauchbeschichtung der Glasfaser und Pyrolyse des Vorprodukts, oder durch eine "Sol-Gel" Reinquarz Sputter-Technik, oder durch Laserablation, oder durch einen Plasmabogen oder durch eine Flüssigglasbeschichtung befähigt ist.

7. Die Methode aus Anspruch 1,2 oder 4, weiterhin dadurch gekennzeichnet, daß die mikroporös beschichtete Glasfaser in-line prozessiert werden, so daß sich als äußerste Beschichtung ein Film aus einem strukturierten dichten Quarz ergibt.

8. Die Methode aus Anspruch 1,2 oder 4, weiterhin dadurch gekennzeichnet, daß durch Nitridation der mikroporösen Beschichtung ein ultra-dünner Film aus Silizium-Oxynitrat als eine hermetische Beschichtung als äußerste Schutzhülle entsteht.

9. Die Methode aus Anspruch 8, weiterhin dadurch gekennzeichnet, daß die Nitridation dadurch geschieht, daß die beschichtete Quarzfaser entweder hoher Temperatur ausgesetzt wird, jedoch unterhalb des Verglasungspunktes zu Stickoxyd oder wasserfreiem Ammoniak; oder durch Nitridisierung eines dünnen SiO₂-Films in Ammoniak und Ausnutzung eines Ammoniakplasmas, um die Nitridation zu verbessern; oder durch Implantation niedrig energetischer Stickstoffionen direkt in die beschichtete Quarzoberfläche; oder durch direkte thermische Nitridation von porösen Quarz bei einer Temperatur von etwa 800°C bis 1200°C, um die Nitridbildung zu verbessern mit einer maximalen Dicke von 20 nm, und um die Ausbildung einer schützenden, dichten Quarzstruktur zu bewirken, wodurch die weitere Nitridation der Oberfläche gehemmt wird.
